# FASCICULE DE BREVET EUROPEEN

(11) **EP 4 544 330 B1**
(45) Date de publication et mention de la délivrance du brevet: **28.01.2026**
(21) Numéro de dépôt: 23731120.4
(22) Date de dépôt: 26.05.2023
(51) Int. Cl.: G02B 5/30, G02B 7/182, G02B 26/06

(54) **CAVITE MULTI PASSAGE D'UN DISPOSITIF OPTIQUE DE MANIPULATION SPATIALE D'UN RAYONNEMENT LUMINEUX**
HOHLRAUM MIT MEHREREN DURCHGÄNGEN FÜR EINE OPTISCHE VORRICHTUNG ZUR RÄUMLICHEN MANIPULATION VON LICHTSTRAHLUNG
MULTI-PASSAGE CAVITY FOR AN OPTICAL DEVICE FOR MANIPULATING LIGHT RADIATION SPATIALLY

(30) Priorité: 27.06.2022 FR 2206382
(43) Date de publication de la demande: 30.04.2025
(73) Titulaire: Cailabs, 35000 Rennes (FR)
(72) Inventeur: DENOLLE, Bertrand, 35000 RENNES (FR); TRUNET, Gauthier, 35000 RENNES (FR)
(74) Mandataire: IP Trust
(86) Numéro de dépôt international: PCT/EP2023/064254
(87) Numéro de publication internationale: WO 2024/002601

(56) Documents cités:
- WO-A1-2019/129518
- WO-A1-2019/129949
- WO-A1-2019/129954
- WO-A1-2019/162637
- US-A1- 2002 181 861
- US-A1- 2012 170 112

## Description

### DOMAINE DE L'INVENTION

La présente invention concerne un dispositif optique de manipulation d'un rayonnement lumineux. Elle concerne plus particulièrement un dispositif optique comprenant une cavité multi passage configurée pour modifier le profil de phase transverse d'un rayonnement lumineux.

### ARRIERE PLAN TECHNOLOGIQUE DE L'INVENTION

Le document WO2019129954A1 divulgue un dispositif optique, désigné par l'acronyme MPLC (Multi Plane Light Conversion selon l'expression anglo-saxonne) permettant de réaliser toute transformation spatiale unitaire d'un rayonnement lumineux. Un tel dispositif a été initialement proposé dans le document « P ro-grammable unitary spatial mode manipulation », Morizur et Al, J. Opt. Soc. Am. A/ Vol. 27, No. 11/November 2010*,* et les documents US9250454, WO2019129949 et US2017010463 en proposent d'autres modes de réalisation particuliers.

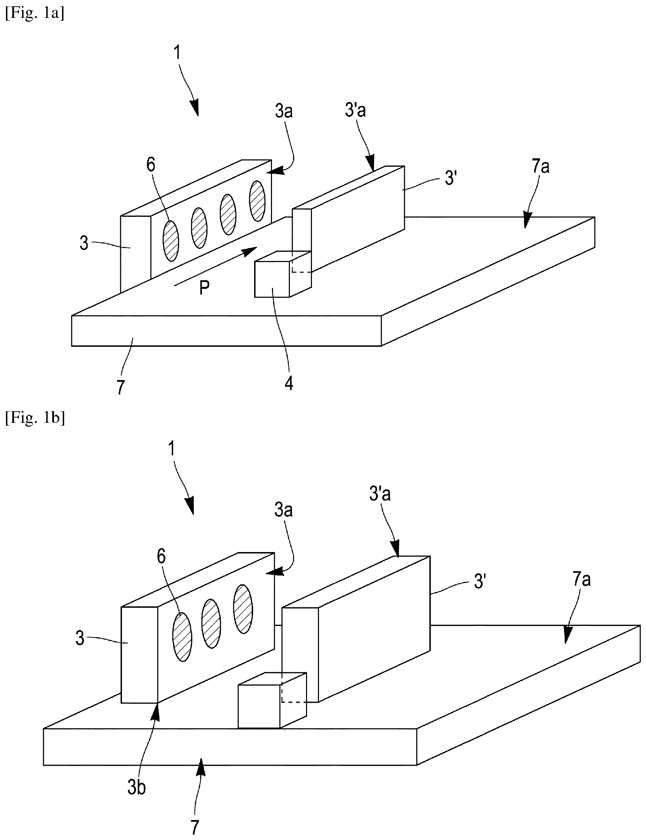

Dans les modes de réalisation proposés par le document WO2019129954A1, et en référence au figures 1a et 1b de la présente demande, le dispositif optique comprend une cavité multipassage 1, composée de l'assemblage d'un support plan 7 présentant une surface d'accueil 7a, d'une pièce d'alignement 4 et de deux éléments optiques réfléchissants 3, 3' disposés en vis-à-vis l'un de l'autre. Le premier élément optique 3 présente une surface principale 3a, tournée vers l'intérieur de la cavité 1, microstructurée. Cette microstructuration est configurée pour modifier la phase d'un rayonnement lumineux incident qui s'y réfléchit une pluralité de fois au cours de sa propagation dans la cavité 1 selon la direction générale P de progression dans la cavité. Plus spécifiquement, la face principale 3a du premier élément optique 3 comprend une pluralité de zones microstructurées 6, chaque zone microstructurée 6 étant disposée sur la face principale 3a pour précisément recevoir le rayonnement lumineux incident et y appliquer une transformation de phase primaire. La pièce d'alignement 4 permet quant à elle d'assurer un bon parallélisme entre les deux éléments optiques réfléchissants 3,3' et permettant de placer et d'orienter le deuxième élément optique 3'.

On pourra se référer aux différents documents cités de l'état de la technique pour bien comprendre comment l'application répétée de ces transformations primaires permet d'opérer une transformation choisie du rayonnement lumineux incident et comment on peut concevoir l'élément optique 3 pour qu'il mette en œuvre une telle transformation. On se référera également à ces documents pour obtenir des exemples de méthodes de conception numérique des microstructurations disposées sur la face principale 3a de l'élément optique 3. Le modèle numérique de ces microstructurations peut être employé pour fabriquer le premier élément optique 3, par exemple par lithographie, usinage, moulage et/ou gravure d'une pièce optique.

Dans cet assemblage, il est important de maintenir un très bon parallélisme entre les deux éléments optiques réfléchissant 3,3' de l'ordre de quelques microradians, pour réaliser avec précision la transformation spatiale au rayonnement lumineux incident. Ceci est d'autant plus vrai que la cavité est longue et/ou que le nombre de réflexions est important.

Quelle que soit la méthode employée pour fabriquer l'élément optique portant la surface réfléchissante microstructurée, il peut être souhaitable que cet élément soit composé d'une pluralité de matériaux. On peut ainsi prévoir que cet élément optique soit formé d'une pièce massive, par exemple en verre, sur laquelle a été formée une couche, par exemple une couche formée d'un métal réfléchissant. La couche métallique porte la microstructuration et sa surface exposée forme la surface principale 3a du premier élément optique 3, tournée vers l'intérieur de la cavité 1. En fournissant le premier élément optique sous la forme d'une pièce massive munie d'une couche fonctionnelle portant la microstructuration, on peut dissocier les fonctions remplies par cet élément. Ainsi, la nature de la couche fonctionnelle peut être choisie pour ses propriétés à être microstructurée et bien réfléchir la lumière. La nature de la pièce massive peut être choisie, quant à elle, pour assurer la rigidité de l'ensemble et, par exemple, permettre de bien dissiper la chaleur produite au niveau des zones microstructurées 6 par les réflexions du rayonnement lumineux.

Quelle que soit la composition du premier élément optique réfléchissant, il est susceptible de se déformer avec la température. Cet élément étant solidairement retenu au support, cette déformation peut avoir tendance à le faire fléchir, et à faire dévier angulairement la surface réfléchissante de sa position nominale, à température ambiante. Cela est d'autant plus vrai si le premier élément optique est composé de matériaux présentant des coefficients de dilatation différents. Les mêmes observations s'appliquent au deuxième élément optique. Une telle déformation affecte le parallélisme des deux éléments optiques réfléchissants définissant la cavité et donc la qualité de la transformation optique opérée sur le rayonnement lumineux incident. Cette transformation est particulièrement sensible à la déviation angulaire des surfaces réfléchissantes, bien plus sensible qu'à un écart fixe de placement relatif des éléments optiques qui n'affecterait pas ce parallélisme.

Le parallélisme des deux éléments optiques réfléchissants d'un dispositif optique MPLC de l'état de la technique peut également être affecté pour d'autres raisons. C'est notamment le cas lorsque les éléments optiques 3,3', le support plan 2, la pièce d'alignement 4 ne sont pas formés des mêmes matériaux. A nouveau, une variation de température par rapport à la température à laquelle ces éléments ont été assemblés peut conduire à faire varier le positionnement précis des pièces entre elles. L'application d'un effort mécanique, tel que des vibrations ou un choc ou un appui direct sur l'une des pièces, peut également conduire à faire varier ce positionnement.

### OBJET DE L'INVENTION

La présente invention vise à pallier tout ou partie des inconvénients précités. Plus précisément, la présente invention vise à proposer une cavité multipassage d'un dispositif MPLC qui soit plus robuste aux efforts mécaniques que celles connues de l'état de la technique. La cavité multipassage selon l'invention peut notamment opérer avec précision une transformation spatiale à un rayonnement lumineux incident dans une large gamme de température. L'invention trouve une application toute particulière pour fournir une cavité multipassage formée de pièces optiques constituées de matériaux présentant des coefficients de dilatation qui ne sont pas tous identiques, ou comprenant une pièce optique formée de matériaux présentant des coefficients de dilatation distincts.

### BREVE DESCRIPTION DE L'INVENTION

En vue de la réalisation de ce but, l'objet de l'invention propose une cavité multipassage comprenant un premier et un second élément optique présentant respectivement des faces principales portant chacune une surface réfléchissante, l'une au moins des surfaces réfléchissantes étant microstructurée, les faces principales étant disposées en vis-à-vis l'une de l'autre de sorte que les surfaces réfléchissantes soient agencées selon une géométrie déterminée.

Selon l'invention la cavité multipassage comprend deux entretoises d'assemblage du premier et du second élément optique, les entretoises étant solidaires des faces principales du premier et du second élément optique pour maintenir la géométrie déterminée entre les deux surfaces réfléchissantes.

Selon d'autres caractéristiques avantageuses et non limitatives de l'invention, prises seules ou selon toute combinaison techniquement réalisable :
- la surface réfléchissante microstructurée présente une pluralité de zones microstructurées définissant une direction générale de progression d'un rayonnement dans la cavité, les deux entretoises d'assemblage s'étendant entre le premier et le second élément optique selon la direction générale de progression ;
- les zones microstructurées sont disposées sur la surface réfléchissante entre les deux entretoises d'assemblage ;
- les deux entretoises d'assemblage sont disposées symétriquement de part et d'autre des surfaces réfléchissantes ;
- les entretoises d'assemblage sont constituées de cales distinctes ;
- les deux entretoises d'assemblage forment les deux bras d'une cale présentant une forme de U ;
- les deux entretoises d'assemblage forment les deux bras d'une cale présentant une forme de O ;
- les deux entretoises d'assemblage sont monolithiquement intégrées au premier ou au second élément optique, du côté de sa face principale, la face principale du premier élément optique étant alors directement assemblé à la face principale du second élément optique ;
- une dimension des deux entretoises d'assemblage est ajustable ;
- l'élément optique portant la surface réfléchissante microstructurée est formé d'une pièce massive munie d'une couche fonctionnelle, la couche fonctionnelle formant la surface réfléchissante, la pièce massive et la couche fonctionnelle présentant des coefficients de dilatation thermiques différents ;
- les deux surfaces réfléchissantes sont planes et positionnées parallèlement l'une de l'autre ;
- le premier élément optique et le deuxième élément optique présentent des coefficients de dilatation thermique distincts.

Selon un autre aspect, l'invention propose une cavité multipassage comprenant un premier et un second élément optique présentant respectivement des faces principales portant chacune une surface réfléchissante, la surface réfléchissante du premier élément optique étant microstructurée et les faces principales étant disposées en vis-à-vis l'une de l'autre de sorte que les surfaces réfléchissantes soient agencées selon une géométrie déterminée.

Selon l'invention la cavité multipassage comprend :
- une cale comprenant deux pièces d'assemblage, la cale étant solidaire de la face principale du premier élément optique ;
- un support présentant une surface d'accueil, la cale et le second élément optique étant solidaire de la surface d'accueil.

Selon une caractéristique avantageuse, la cale peut présenter une forme de U ou de O.

Selon un autre aspect encore, l'invention propose un dispositif optique MPLC comprenant une cavité multipassage (1) selon l'un des modes décrits ci-dessus et un étage d'entrée et/ou un étage de sortie assemblé à la cavité multipassage.

### BREVE DESCRIPTION DES FIGURES

D'autres caractéristiques et avantages de l'invention ressortiront de la description détaillée de l'invention qui va suivre en référence aux figures annexées sur lesquels :
[Fig.1a]
[Fig.1b]
Les figures 1a et 1b représentent des cavités multipassage d'un dispositif MPLC de l'état de la technique ;
[Fig.2a]
[Fig.2b]

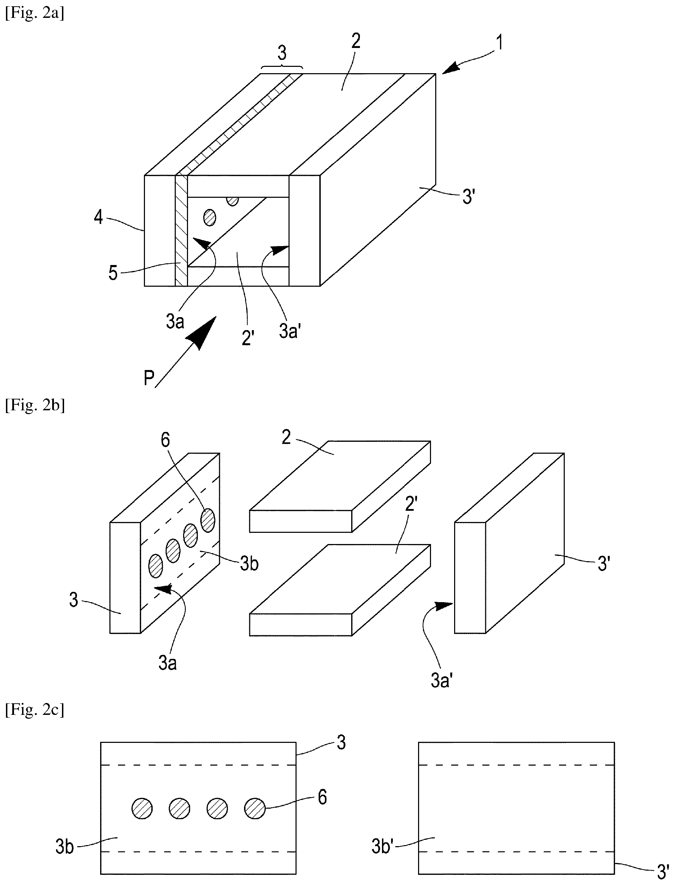

Les figures 2a et 2b représentent respectivement une vue d'ensemble et une vue éclatée d'une cavité multipassage conforme à l'invention ;
[Fig.2c]
La [Fig.2c] est une vue de face des faces principales du premier élément optique et du deuxième élément optique;
[Fig.3a]
[Fig.3b]
[Fig.3c]
[Fig.4]
[Fig.5]

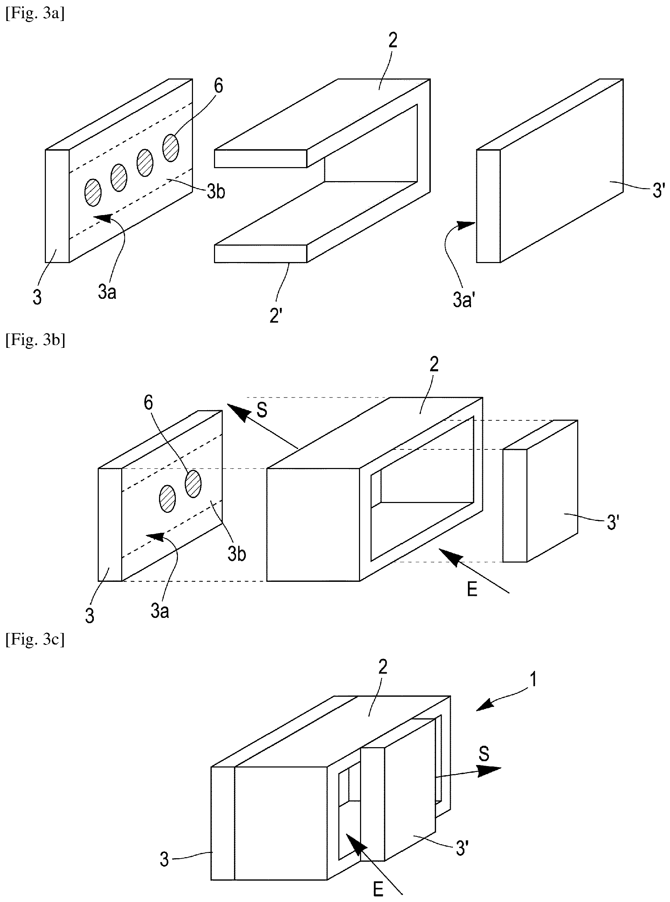

Les figures 3a, 3b, 3c, 4, 5 représentent d'autres modes de réalisation d'une cavité multipassage conforme à l'invention.

### DESCRIPTION DETAILLEE DE L'INVENTION

D'une manière très générale, la présente description porte sur un dispositif optique MPLC visant à manipuler un rayonnement lumineux incident pour former un rayonnement lumineux transformé. Avantageusement, les formes du rayonnement lumineux incident et du rayonnement lumineux transformé sont différentes l'une de l'autre. La manipulation du rayonnement lumineux incident comprend la modification contrôlée du profil de phase transverse de ce rayonnement, au cours d'une pluralité de transformations primaires qui contribuent, en combinaison, à opérer une fonction optique déterminée. Il peut s'agir d'un multiplexage ou d'un démultiplexage spatial du rayonnement incident ou de toute autre transformation modale dans le domaine spatial, par exemple un changement maitrisé de la forme d'un faisceau lumineux constituant le rayonnement lumineux incident. Il peut par exemple s'agir d'opérer 4 transformations primaires ou plus, comme par exemple 8, 10, 12, 14, voire même 20 transformations élémentaires ou plus.

Le dispositif optique MPLC comprend une cavité multipassage 1 pour transformer le rayonnement lumineux incident en un rayonnement lumineux transformé. Le dispositif optique peut éventuellement comprendre d'autres éléments, tels qu'un étage d'entrée et/ou un étage de sortie permettant respectivement de guider l'injection du rayonnement lumineux incident et l'extraction du rayonnement lumineux transformé de la cavité 1, lorsque ces rayonnements ne sont pas simplement injectés et/ou extraits du dispositif 1 par simple propagation en espace libre.

La cavité multipassage 1 conforme aux différents modes de réalisation, et en référence aux figures, est composée de l'agencement de deux éléments optiques 3, 3' présentant respectivement des faces principales 3a, 3a', ces faces principales portant chacune une surface réfléchissante 3b, 3b'. Les faces principales 3a, 3a' des deux éléments optiques 3, 3' sont disposées en vis-à-vis l'une de l'autre de sorte que les surfaces réfléchissantes définissent une géométrie déterminée de la cavité multipassage 1.

Dans les modes de réalisation représentés, les deux surfaces réfléchissantes 3b,3b' sont planes et positionnées pour être parallèle l'une de l'autre. Dans ce cas usuel, la géométrie déterminée correspond à une valeur fixe, scalaire, d'espacement entre les deux surfaces réfléchissantes 3b,3b'.

Mais cette configuration de surfaces planes et parallèles n'est pas impérative et, d'une manière plus générale, la géométrie déterminée peut correspondre à un profil déterminé d'écartement séparant les surfaces réfléchissantes 3b,3b'des deux éléments optiques 3,3'.

Dans les deux cas toutefois, que la géométrie déterminée de la cavité se définisse comme une grandeur scalaire ou comme un profil, il est important que celle-ci ne varie pas dans le temps, notamment sous l'effet de la température ou d'une force extérieure, afin que le dispositif optique MPLC reste parfaitement fonctionnel. En d'autres termes, il est important que la géométrie de la cavité ne s'écarte pas ou pas excessivement, au cours du temps, de la géométrie déterminée.

La surface réfléchissante 3b, 3b' de l'un au moins des éléments optiques 3, 3' est microstructurée. Par simplicité d'expression, on désignera dans la suite de cette description la surface réfléchissante microstructurée et l'élément optique portant cette surface par, respectivement, les références « 3b » et « 3 ». Mais d'une manière générale, les surfaces réfléchissantes 3b,3b' du premier et/ou du deuxième éléments optiques 3, 3' peuvent être microstructurées. Si ce n'est pas le cas, et qu'un seul des éléments optiques 3 présente une surface réfléchissante microstructurée 3b, alors l'autre élément optique 3' présente une simple surface réfléchissante 3b', tel qu'un miroir.

Cette microstructuration est configurée pour modifier la phase spatiale d'un rayonnement lumineux incident qui s'y réfléchit une pluralité de fois au cours de sa propagation dans la cavité 1 selon la direction générale de progression P du rayonnement dans la cavité. A cet effet, la surface réfléchissante microstructurée peut être composée d'une pluralité de zones microstructurées 6 distinctes s'étendant selon la direction de progression P. Chaque zone microstructurée 6 est précisément disposée sur la face principale 3b de l'élément optique pour recevoir le rayonnement lumineux incident, le réfléchir et lui appliquer une transformation de phase primaire.

Il n'est toutefois pas nécessaire que les zones microstructurées 6 soient distinctes les unes des autres et toute autre configuration de microstructuration pourrait convenir, dans la mesure où elle permet d'appliquer une transformation déterminée du rayonnement incident au cours des réflexions multiples.

Par « surface microstructurée » on signifie, à titre d'exemple, que la face ou la surface peut présenter des « pixels » dont les dimensions sont comprises entre quelques microns ou moins à quelques centaines de microns ou plus. Chaque pixel présente une élévation, par rapport à un plan moyen définissant la face ou la surface en question, d'au maximum quelques microns ou d'au maximum quelques centaines de microns. La surface microstructurée peut ainsi présenter une résolution (dans son plan moyen) et une élévation (en « peak to valley », c'est à dire « de creux à crête ») qui peuvent s'étendre d'une fraction de la longueur d'onde centrale du rayonnement dont on veut modifier la phase spatiale jusqu'à plusieurs centaines de fois cette longueur d'onde, voire même plusieurs milliers de fois cette longueur d'onde.

Les éléments optiques 3, 3' peuvent avoir toute forme qui convient. Comme on l'a déjà exprimé, ces éléments optiques sont choisis pour que leurs surfaces réfléchissantes 3b,3b' soient parfaitement planes (à la microstructuration près), mais cela ne forme pas une nécessité. D'une manière générale, on détermine la microstructuration de la surface réfléchissante 3b(ou des surfaces réfléchissantes), au cours de sa conception numérique, selon la forme et le positionnement relatif des surfaces réfléchissantes 3b,3b' et donc selon la géométrie de la cavité. Il est donc important que cette géométrie reste stable pour permettre la transformation précise du rayonnement lumineux incident, notamment lorsque la cavité 1 est soumise à des efforts tendant à la déformer, par exemple par des efforts engendrés lors d'excursion importante en température.

On notera qu'il peut exister un écart entre la géométrie idéale de la cavité ayant servi à la conception de la microstructuration et l'écartement mesuré entre les surfaces réfléchissantes 3b,3b', cet écart pouvant être dû aux tolérances de fabrication des pièces optiques formant la cavité et aux tolérances d'assemblage de ces pièces. Cet écart, lorsqu'il est stable dans le temps et modéré, n'affecte pas le bon fonctionnement du dispositif ou peut être compensé en ajustant la position et l'angle du rayonnement lumineux incident vis-à-vis de la cavité.

La géométrie déterminée correspond donc sensiblement au profil d'espacement entre les deux surfaces réfléchissantes 3b,3b' lorsque ce profil est mesuré à l'ambiante et en dehors de toute sollicitation mécanique de la cavité.

Le premier élément optique 3, le deuxième élément optique 3', et toutes les autres pièces formant la cavité, peuvent être choisi en tout matériau qui convient. Il peut par exemple s'agir de quartz, de verre, silice fondue, d'un métal ou de silicium, voire d'une matière plastique. Il n'est pas nécessaire dans le cadre de la présente invention que les pièces formant la cavité soient formées de matériaux présentant des coefficients de dilatation thermique identiques.

Les éléments optiques 3,3', ou certains d'entre eux, peuvent également être formés d'une pluralité de matériaux présentant des coefficients de dilatation thermique distincts. C'est notamment le cas de l'élément optique 3 portant la surface réfléchissante microstructurée 3b. Celui-ci peut ainsi être formé, comme cela est visible sur la [Fig.2a], d'une pièce massive 4 munie d'une couche fonctionnelle 5, la couche fonctionnelle formant la surface réfléchissante microstructurée 3b, la pièce massive 4 et la couche fonctionnelle 5 présentant des coefficients de dilatation thermiques différents. On a présenté en introduction de cette demande tout l'intérêt d'un tel agencement.

La pièce massive 4 peut ainsi être constituée de quartz, de verre, de silice fondue, d'un métal ou de silicium, ou d'une matière plastique. La couche fonctionnelle 5, quant à elle, peut par exemple être constituée ou comprendre un métal (de l'or, de l'argent, du nickel), un diélectrique ou encore une résine insolée (par exemple la résine distribuée sous la marque commerciale ORMOCOMP^{®}). La couche fonctionnelle 5 peut être formée sur la partie massive par toute technique qui convient : assemblage, dépôt, plaquage...

### Première approche

Pour permettre l'assemblage robuste du premier élément optique 3 et du deuxième élément optique 3', une cavité multipassage 1 conforme à une première approche comprend également deux entretoises 2,2' permettant d'assembler directement entre eux le premier et le second élément optique 3,3'. Ces deux entretoises, dites « d'assemblage », sont solidaires des faces principales 3a,3a' du premier et du second élément optique 3,3'. Chaque entretoise 2,2' est solidaire de la face principale du premier élément optique 3 et de la face principale du second élément optique 3.

Par « solidaire » on signifie que chaque entretoise d'assemblage 2,2' est retenue aux deux éléments optiques 3,3' sans aucun degré de liberté.

Elles sont dimensionnées avec précision pour permettre de maintenir la géométrie déterminée entre les surfaces réfléchissantes 3b,3b' portées par les faces principales 3a,3a' des deux éléments optiques 3,3', même lorsque des efforts importants sont appliqués à la cavité 1. Dit autrement, des efforts importants appliqués à la cavité 1 peuvent amener à déformer certaines pièces qui la composent, mais ces déformations ne se manifestent préférentiellement pas au niveau des surfaces réfléchissantes 3b,3b' si bien que la géométrie déterminée peut être préservée. Ainsi, malgré la présence d'une flèche qui peut être engendrée par les efforts mécaniques d'origine thermique par exemple, les deux surfaces réfléchissantes 3b,3b' présentent un angle moyen stabilisé, ces angles ayant un impact significatif sur les transformations opérées par la cavité. Pour favoriser cette stabilisation, on peut chercher à positionner les deux entretoises 2,2' symétriquement de part et d'autre des surfaces réfléchissantes 3b,3b'.

Avantageusement, et comme cela est visible sur les figures, les deux entretoises d'assemblage 2,2' s'étendent entre le premier et le second élément optique 3,3' selon la direction générale de progression P du rayonnement dans la cavité. Lorsque la cavité 1 multipassage est constituée, les zones microstructurées 6 sont disposées sur la surface réfléchissante 3b disposée entre les deux entretoises d'assemblage 2,2'.

Dans cette configuration, un effort appliqué à la cavité ou une déformation de l'une des pièces de la cavité n'affecte pas ou peu l'écartement des surfaces réfléchissantes 3b,3b' et donc la géométrie interne de la cavité, dont les paramètres sont fixés de manière robuste par la présence des deux entretoises d'assemblage 2,2'.

Lorsque les entretoises 2,2' sont assemblées de part et d'autre des surfaces réfléchissantes, le long de la direction de progression P, la cavité préserve deux ouvertures latérales permettant d'y injecter le rayonnement lumineux incident et de recueillir le rayonnement lumineux transformé.

Les entretoises d'assemblage 2,2' peuvent se présenter sous la forme d'au moins une pièce additionnelle, désignée « cale » dans la suite de cette description. Cette ou ces cale(s) peut/peuvent être assemblée(s) aux faces principales 3a,3a' des éléments optiques 3,3', à l'aide d'une matière adhésive (qui peut être réticulable aux UV ou à la température), par serrage mécanique, par fusion laser ou par adhésion moléculaire par exemple.

Dans le mode de réalisation des figures 2a et 2b, les deux entretoises d'assemblage 2,2' sont constituées par deux cales distinctes.

Dans le mode de réalisation de la [Fig.3a], les deux entretoises d'assemblage 2,2' forment les deux bras d'une unique cale présentant une forme de U. Dans cette configuration, une des ouvertures latérales de la cavité est refermée par la base du U

Dans le mode de réalisation des figures 3b et 3c, les deux entretoises forment les deux bras d'une unique cale présentant une forme de O, les deux ouvertures latérales de la cavité étant alors refermées par la cale.

Pour néanmoins permettre la propagation des rayonnements lumineux via les ouvertures latérales, on pourra choisir le matériau de la cale pour qu'il soit transparent au rayonnement lumineux incident ou transformé et ainsi permettre le bon fonctionnement du dispositif optique.

D'une manière plus générale, les entretoises 2,2' peuvent être configurées et assemblées aux éléments optiques 3, 3' pour dégager des ouvertures latérales ou faciales permettant la propagation des rayonnements lumineux dans et hors de la cavité 1. Ces ouvertures peuvent être de nature mécanique ou de nature optique, par transparence du matériau formant les entretoises. Dans une alternative, on pourrait également aménager des passages dans l'un et/ou l'autre du premier et du deuxième élément optique 3,3', ces passages permettant la propagation des rayonnements lumineux dans et hors de la cavité 1.

Dans le mode de réalisation de la [Fig.3c], deux ouvertures faciales référencées E et S, sont aménagées pour respectivement permettre l'injection d'un rayonnement incident dans la cavité et permettre de ressortir le rayonnement transformé de cette cavité. Ces ouvertures sont de natures mécaniques et disposées entre la seconde pièce optique 3'et la cale. La seconde pièce optique 3' présente une dimension, dans la direction générale de progression P, réduite par rapport à celle de la cale, dégageant ainsi de part et d'autre de la seconde pièce optique 3' des passages formant les ouvertures.

Dans le mode de réalisation de la [Fig.3b], une première ouverture faciale E est similaire à celle de la [Fig.3c], agencée entre la seconde pièce optique 3' et la cale. Une seconde ouverture faciale S est quant à elle aménagée entre la cale et la première pièce optique 3. La première et la seconde pièce optique 3,3' présentent donc chacune une dimension, dans la direction générale de progression, réduite par rapport à celle de la cale. Cela permet donc de dégager deux passages formant les ouvertures faciales E,S de la cavité.

On note qu'une cavité présentant des ouvertures faciales est compatible avec l'ensemble des modes réalisation présentés, et pas uniquement avec une cale en forme de O comme cela est représenté sur la [Fig.3b],3c.

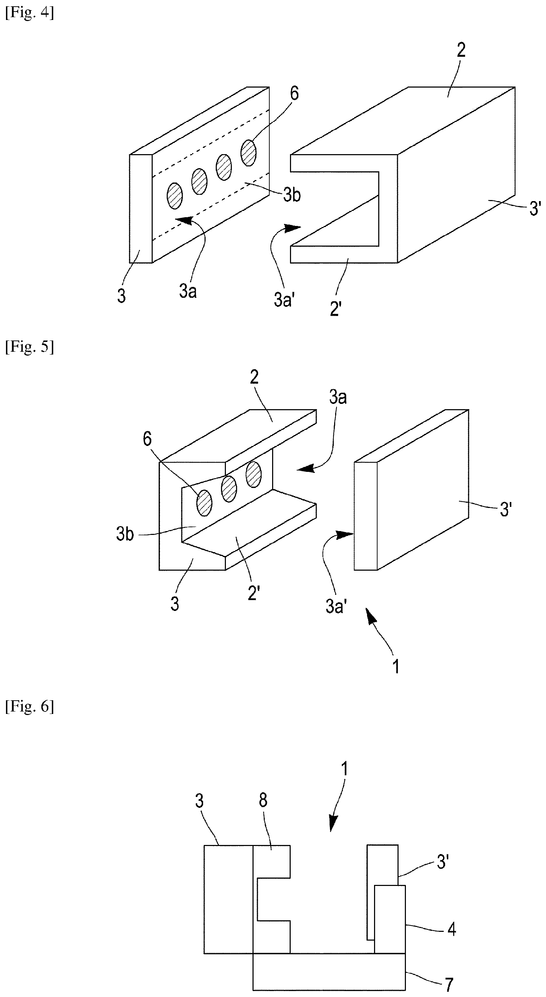

Plutôt que d'être fourni sous la forme d'au moins une cale, les deux entretoises d'assemblage peuvent être monolithiquement intégrées au premier ou au second élément optique, du côté de sa face principale. Ces modes de réalisation sont présentés aux figures 4 et 5. Ces entretoises forment alors des parties saillantes (vis-à-vis de la surface réfléchissante) de l'élément optique qui les portent. Dans ce cas, la face principale 3a du premier élément optique est directement assemblée à la face principale 3a' du second élément optique, via les parties saillantes formant les entretoises, sans que la cavité 1 ne comporte d'autres pièces nécessaires à sa constitution.

D'une manière générale dans le cadre de cette première approche, aucune autre pièce n'est nécessaire que le premier et le deuxième élément optique et, éventuellement, la ou les cales, pour former la cavité multipassage 1. En particulier, il n'est pas nécessaire de prévoir de support.

Dans un mode de réalisation conforme à cette première approche, on peut prévoir que l'une au moins des entretoises soit configurée pour que sa dimension s'étendant de l'une à l'autre des surfaces réfléchissantes soit ajustable. Il peut s'agir par exemple de munir l'une au moins des entretoises d'un élément chauffant, tel qu'une résistance, ou de former cette entretoise d'un matériau piézoélectrique muni d'électrodes de commande. On peut, en commandant la tension appliquée à la résistance ou aux électrodes, ajuster finement la dimension de l'entretoise séparant les deux éléments optiques, pour les rapprocher de la géométrie déterminée.

### Deuxième approche.

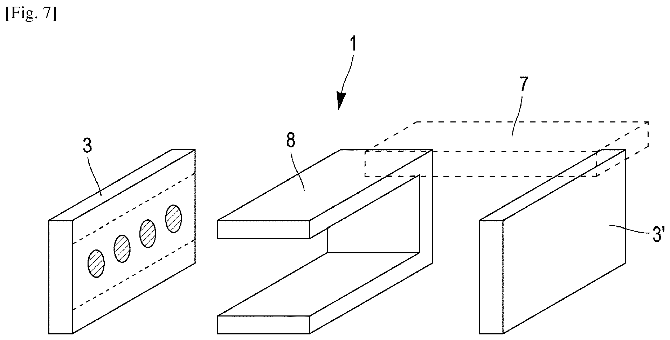

Dans une deuxième approche, visant à proposer une cavité multipassage 1 robuste et dont des modes de réalisation sont représentés aux figures 6 et 7, on prévoit un support 7 présentant une surface d'accueil sur laquelle est solidarisé (c'est-à-dire assemblé sans aucun degré de liberté) le second élément optique 3'. Cet assemblage peut être réalisé directement ou par l'intermédiaire d'un cube 4, permettant d'orienter le second élément optique 3' vis-à-vis du support 7, comme cela est le cas sur la [Fig.6].

Une cale 8 comprenant deux pièces d'assemblage est également retenue solidairement sur la face principale 3a du premier élément optique 3. Il peut s'agir d'une cale en forme de U ou en forme de O, comme cela a déjà été présenté dans un mode de mise en œuvre conforme à la première approche. Le premier élément optique 3 présente une surface réfléchissante microstructurée. Les pièces d'assemblage de la cale 8 sont assemblées de préférence de part et d'autre, et avantageusement symétriquement, de la surface réfléchissante microstructurée 3b du premier élément optique 3. Elles peuvent s'étendre selon la direction générale de progression P. Elles tendent à rigidifier le premier élément optique 3 du côté de sa surface réfléchissante 3b, ce qui prévient la déformation de cette surface sous l'application d'efforts.

La cale 8, portant le premier élément optique 3, est également solidaire de la surface d'accueil du support 7 dans un agencement définissant la géométrie déterminée entre les deux surfaces réfléchissantes.

Tout comme dans la première approche, des efforts importants appliqués à la cavité 1 conforme à la deuxième approche peuvent amener à déformer certaines pièces qui la composent, et notamment le premier élément optique 3. Mais ces déformations ne se manifestent préférentiellement pas au niveau des surfaces réfléchissantes si bien que la géométrie déterminée peut être préservée.

Comme cela est visible sur la [Fig.7], il n'est pas nécessaire que le support 7 soit en contact avec toute l'étendue d'un côté de la cale 8 et d'un côté du deuxième élément optique 3'. Il peut s'agir d'un élément formant un pont entre ces deux pièces, en contact sur une partie seulement de leurs côtés.

Bien entendu l'invention n'est pas limitée aux deux approches et aux modes de mise en œuvre décrits et on peut y apporter des variantes de réalisation sans sortir du cadre de l'invention tel que défini par les revendications.

Ainsi, le dispositif optique peut éventuellement comprendre un étage d'entrée et/ou un étage de sortie assemblé à la cavité, permettant respectivement de guider l'injection du rayonnement lumineux incident et l'extraction du rayonnement transformé. Ces étages peuvent correspondre à une fibre optique ou un réseau de fibres optiques (cette ou ces fibres pouvant être lentillée(s) ou non), ou comprendre une source laser, un élément optique tel qu'un dichroïque, une lentille, un miroir concave, un élément à contrôle de polarisation, un MEMs, un miroir de contrôle tip/tilt, une matrice SLM, un réseau de diffraction, un diaphragme, une vitre avec traitement de surface. Ces étages peuvent être notamment fixés sur l'une au moins des tranches des éléments optiques ou sur l'une au moins des entretoises.

## Revendications

1. Cavité multipassage (1) comprenant un premier et un second élément optique (3,3') présentant respectivement des faces principales portant chacune une surface réfléchissante (3b,3b'), l'une au moins des surfaces réfléchissantes (3b,3b') présente une pluralité de zones microstructurées alignées selon une direction générale de progression (P) d'un rayonnement dans la cavité, les faces principales (3a, 3'a) étant disposées en vis-à-vis l'une de l'autre de sorte que les surfaces réfléchissantes (3b,3b') soient agencées selon une géométrie déterminée de la cavité multipassage (1), la cavité multipassage (1) étant **caractérisée en ce que** :
• l'élément optique (3) portant la surface réfléchissante microstructurée (3b) est formé d'une pièce massive (4) munie d'une couche fonctionnelle (5), la couche fonctionnelle (5) formant la surface réfléchissante (3b), la pièce massive (4) et la couche fonctionnelle (5) présentant des coefficients de dilatation thermiques différents ;
• et **en ce qu'**elle comprend deux entretoises d'assemblage (2,2') du premier et du second élément optique (3,3'), chacune des entretoises (2,2') étant solidaire de la face principale du premier élément optique (3) et de la face principale du second élément optique (3) pour maintenir la géométrie déterminée entre les deux surfaces réfléchissantes (3b,3b'), les deux entretoises d'assemblage (2,2') s'étendant entre le premier et le second élément optique (3,3') selon la direction générale de progression (P), les zones microstructurées 6 étant disposées entre les deux entretoises d'assemblage 2,2'.

2. Cavité multipassage (1) selon la revendication 1 dans laquelle les deux entretoises d'assemblage (2,2') sont disposées symétriquement de part et d'autre des surfaces réfléchissantes (3,3').

3. Cavité multipassage (1) selon l'une des revendications précédentes dans lequel les entretoises d'assemblage (2,2') sont constituées de cales distinctes.

4. Cavité multipassage (1) selon l'une des revendications 1 à 2 dans laquelle les deux entretoises d'assemblage (2,2') forment les deux bras d'une cale présentant une forme de U.

5. Cavité multipassage (1) selon l'une des revendications 1 à 2 dans laquelle les deux entretoises d'assemblage (2,2') forment les deux bras d'une cale présentant une forme de O.

6. Cavité multipassage (1) selon l'une des revendications 1 à 2 dans laquelle les deux entretoises d'assemblage (2,2') sont monolithiquement intégrées au premier ou au second élément optique (3,3'), du côté de sa face principale, la face principale du premier élément optique (3) étant alors directement assemblé à la face principale du second élément optique (3').

7. Cavité multipassage (1) selon l'une des revendications précédentes dans laquelle une dimension des deux entretoises d'assemblage (2, 2') est ajustable.

8. Cavité multipassage (1) selon l'une des revendications précédentes dans laquelle les deux surfaces réfléchissantes (3b, 3b') sont planes et positionnées parallèlement l'une de l'autre.

9. Cavité multipassage (1) selon l'une des revendications précédentes dans laquelle le premier élément optique (3) et le deuxième élément optique (3') présentent des coefficients de dilatation thermique distincts.

10. Dispositif optique MPLC comprenant une cavité multipassage (1) selon l'une des revendications précédentes et un étage d'entrée et/ou un étage de sortie assemblé à la cavité multipassage (1).

## Patentansprüche

1. Mehrfachdurchgangshohlraum (1), umfassend ein erstes und ein zweites optisches Element (3, 3'), die jeweils Hauptflächen aufweisen, wobei jede eine reflektierende Oberfläche (3b, 3b') trägt, wobei mindestens eine der reflektierenden Oberflächen (3b, 3b') eine Vielzahl von mikrostrukturierten Bereichen aufweist, die entlang einer allgemeinen Progressionsrichtung (P) einer Strahlung in dem Hohlraum ausgerichtet sind, wobei die Hauptflächen (3a, 3'a) einander gegenüberliegend eingerichtet sind, sodass die reflektierenden Oberflächen (3b, 3b') gemäß einer bestimmten Geometrie des Mehrfachdurchgangshohlraums (1) angeordnet sind, wobei der Mehrfachdurchgangshohlraum (1) **dadurch gekennzeichnet ist, dass:**
• das optische Element (3), das die mikrostrukturierte reflektierende Oberfläche (3b) trägt, aus einem Festkörperstück (4) ausgebildet ist, das mit einer funktionellen Schicht (5) versehen ist, wobei die funktionelle Schicht (5) die reflektierende Oberfläche (3b) ausbildet, wobei das Festkörperstück (4) und die funktionelle Schicht (5) unterschiedliche Wärmeausdehnungskoeffizienten aufweisen;
• und **dadurch, dass** er zwei Montageabstandhalter (2, 2') des ersten und des zweiten optischen Elements (3, 3') umfasst, wobei jeder der Abstandshalter (2, 2') an der Hauptfläche des ersten optischen Elements (3) und an der Hauptfläche des zweiten optischen Elements (3) fest verbunden ist, zum Aufrechterhalten der bestimmten Geometrie zwischen den zwei reflektierenden Oberflächen (3b, 3b'), wobei sich die zwei Montageabstandhalter (2, 2') zwischen dem ersten und zweiten optischen Element (3, 3') entlang der allgemeinen Progressionsrichtung (P) erstrecken, wobei die mikrostrukturierten Bereiche 6 zwischen den zwei Montageabstandhaltern 2, 2' eingerichtet sind.

2. Mehrfachdurchgangshohlraum (1) nach Anspruch 1, wobei die zwei Montageabstandhalter (2, 2') auf beiden Seiten der reflektierenden Oberflächen (3, 3') symmetrisch eingerichtet sind.

3. Mehrfachdurchgangshohlraum (1) nach einem der vorstehenden Ansprüche, wobei die Montageabstandhalter (2, 2') aus verschiedenen Füllstücken gebildet sind.

4. Mehrfachdurchgangshohlraum (1) nach einem der Ansprüche 1 bis 2, wobei die zwei Montageabstandhalter (2, 2') die die zwei Arme eines Füllstücks ausbilden, eine U-Form aufweisen.

5. Mehrfachdurchgangshohlraum (1) nach einem der Ansprüche 1 bis 2, wobei die zwei Montageabstandhalter (2, 2'), die die zwei Arme eines Füllstücks ausbilden, eine O-Form aufweisen.

6. Mehrfachdurchgangshohlraum (1) nach einem der Ansprüche 1 bis 2, wobei die zwei Montageabstandhalter (2, 2') in das erste oder das zweite optische Element (3, 3') auf der Seite seiner Hauptfläche monolithisch integriert sind, wobei die Hauptfläche des ersten optischen Elements (3) dann direkt mit der Hauptfläche des zweiten optischen Elements (3') montiert wird.

7. Mehrfachdurchgangshohlraum (1) nach einem der vorstehenden Ansprüche, wobei eine Abmessung der zwei Montageabstandhalter (2, 2') einstellbar ist.

8. Mehrfachdurchgangshohlraum (1) nach einem der vorstehenden Ansprüche, wobei die zwei reflektierenden Oberflächen (3b, 3b') flach und parallel zueinander positioniert sind.

9. Mehrfachdurchgangshohlraum (1) nach einem der vorstehenden Ansprüche, wobei das erste optische Element (3) und das zweite optische Element (3') verschiedene Wärmeausdehnungskoeffizienten aufweisen.

10. Optische MPLC-Vorrichtung, umfassend einen Mehrfachdurchgangshohlraum (1) nach einem der vorstehenden Ansprüche und einer Eingangsstufe und/oder einer Ausgangsstufe, die an den Mehrfachdurchgangshohlraum (1) montiert sind.

## Claims

1. Multi-passage cavity (1) comprising a first and a second optical element (3,3') respectively having main faces that each bear a reflective surface (3b,3b'), at least one of the reflective surfaces (3b,3b') has a plurality of microstructured zones aligned in a general direction (P) in which a beam progresses in the cavity, the main faces (3a,3'a) being disposed facing one another such that the reflective surfaces (3b,3b') are arranged according to a defined geometry of the multi-passage cavity (1), the multi-passage cavity (1) being **characterized in that:**
• the optical element (3) bearing the microstructured reflective surface (3b) is formed of a solid part (4) provided with a functional layer (5), the functional layer (5) forming the reflective surface (3b), the solid part (4) and the functional layer (5) having different coefficients of thermal expansion;
• and **in that** it comprises two spacers (2,2') for assembling the first and the second optical element (3,3'), each of the spacers (2,2') being securely fastened to the main face of the first optical element (3) and to the main face of the second optical element (3) in order to maintain the defined geometry between the two reflective surfaces (3b,3b'), the two assembly spacers (2,2') extending between the first and the second optical element (3,3') in the general progression direction (P), the microstructured zones 6 being disposed between the two assembly spacers 2,2'.

2. Multi-passage cavity (1) according to claim 1, wherein the two assembly spacers (2,2') are disposed symmetrically on both sides of the reflective surfaces (3,3').

3. Multi-passage cavity (1) according to either of the preceding claims, wherein the assembly spacers (2,2') consist of separate blocks.

4. Multi-passage cavity (1) according to either of claims 1 and 2, wherein the two assembly spacers (2,2') form the two arms of a U-shaped block.

5. Multi-passage cavity (1) according to either of claims 1 and 2, wherein the two assembly spacers (2,2') form the two arms of an O-shaped block.

6. Multi-passage cavity (1) according to either of claims 1 and 2, wherein the two assembly spacers (2,2') are monolithically integrated into the first or into the second optical element (3,3') on its main face, the main face of the first optical element (3) then being directly assembled with the main face of the second optical element (3').

7. Multi-passage cavity (1) according to any of the preceding claims, wherein a dimension of the two assembly spacers (2, 2') is adjustable.

8. Multi-passage cavity (1) according to any of the preceding claims, wherein the two reflective surfaces (3b,3b') are planar and positioned parallel to one another.

9. Multi-passage cavity (1) according to any of the preceding claims, wherein the first optical element (3) and the second optical element (3') have different coefficients of thermal expansion.

10. MPLC optical device, comprising a multi-passage cavity (1) according to any of the preceding claims and an input stage and/or an output stage assembled with the multi-passage cavity (1).
